Europäisches Patentamt

European Patent Office

Office européen des brevets

(11) Veröffentlichungsnummer: **0 048 948**
**B1**

(19)

# (12) EUROPÄISCHE PATENTSCHRIFT

(45) Veröffentlichungstag der Patentschrift:
22.05.85

(51) Int. Cl.⁴: **B 29 C  55/14**, B 29 C  55/18, B 29 C  59/04

(21) Anmeldenummer: 81107565.4

(22) Anmeldetag: 23.09.81

(54) **Verfahren zur Herstellung von biaxial gestreckten und geprägten Folien aus Vinylchloridpolymerisaten.**

(30) Priorität: 26.09.80  DE 3036289

(43) Veröffentlichungstag der Anmeldung:
07.04.82 Patentblatt 82/14

(45) Bekanntmachung des Hinweises auf die Patenterteilung:
22.05.85 Patentblatt 85/21

(84) Benannte Vertragsstaaten:
AT BE CH DE FR GB IT LI NL SE

(56) Entgegenhaltungen:
DE - A - 2 833 982
DE - B - 2 460 663
FR - A - 1 550 529
US - A - 2 689 378
US - A - 3 589 973
US - A - 3 664 780
US - H - 927 010

(73) Patentinhaber: HOECHST AKTIENGESELLSCHAFT,
Postfach 80 03 20, D-6230 Frankfurt am Main 80 (DE)

(72) Erfinder: Andersen, Heinz-Erhardt, Dr.,
Ottacharstrasse 16, D-8261 Burgkirchen/Alz (DE)
Erfinder: Brebels, Jaek Joannes, Vinkstrasse 44,
B-3598 Bocholt (BE)
Erfinder: Matschke, Klaus, Dr., Hochfelinstrasse 24,
D-8261 Burgkirchen/Alz (DE)
Erfinder: Scheier, Franz, Edelweissstrasse 11,
D-8261 Burgkirchen/Alz (DE)

ACTORUM AG

**Beschreibung**

Die Erfindung betrifft ein Verfahren zur Herstellung von gestreckten und geprägten Polyvinylchlorid-Folien durch Erhitzen einer Polyvinylchlorid-Folienbahn auf eine Temperatur von 90 bis 160 °C, Prägen der erhitzten Folienbahn im Prägespalt eines Prägewerkes aus einer Prägewalze und einer Gegendruckwalze, wobei die Prägewalze durch Kühlen auf einer Temperatur von −10 bis +60 °C gehalten wird, und durch Abkühlen der das Prägewerk verlassenden Folienbahn auf Raumtemperatur.

Das Prägen von erhitzten Polyvinylchlorid-Folienbahnen im Prägespalt eines Prägewerkes aus einer gekühlten Prägewalze und einer Gegendruckwalze, wobei die das Prägewerk verlassende Folienbahn auf Raumtemperatur abgekühlt wird, ist aus der US-A-2 689 378 bekannt. Um zu gewährleisten, dass die Folienbahn vollständig eben in den Prägespalt einläuft und damit eine relativ scharfe Prägung erhält, wird sie gleichzeitig mit dem Erhitzen auf Prägetemperatur entsprechend leicht längsgestreckt. Mit diesem Verfahren wird lediglich eine geprägte, nicht aber auch eine im eigentlichen Sinne gestreckte und schon gar nicht eine biaxial gestreckte Polyvinylchlorid-Folie erhalten.

In der DE-B-1 594 129 wird ein Verfahren zum Längs- und Querstrecken von Polyvinylchlorid-Folien im thermoelastischen Temperaturbereich beschrieben. Die biaxial gestreckten und damit erhöhte Festigkeitswerte besitzenden Folien werden als Trägerfolien zur Bereitung von Klebebändern eingesetzt. Diese Klebebänder bestehen aus der Trägerfolie und einer darauf einseitig aufgebrachten Klebemittelschicht, die aus einem Haftvermittler und dem eigentlichen Klebemittel zusammengesetzt ist. Der Haftvermittler hat die Aufgabe, das Klebemittel auf dem Trägerfilm so zu verankern, dass das Klebemittel beim Aufwickeln des Klebebandes nicht auf die andere, unbeschichtete Oberfläche des Trägerfilms übertragen wird. Beim Abwickeln des Klebebandes besteht jedoch Gefahr, dass das Klebeband abreisst, insbesondere wenn die Haftung zwischen der Klebemittel enthaltenden Schicht und der unbeschichteten Oberfläche des Trägerfilms sehr gross ist. Um diesen Nachteil zu überwinden, kann man bekanntlich auf die klebemittelfreie Oberfläche des Trägerfilms eine antiadhäsive Beschichtung aufbringen, wodurch die zum Abrollen des aufgewickelten Klebebandes erforderliche Kraft verringert wird. Derartige Klebebänder haben jedoch den Nachteil, dass sie auf der klebemittelfreien Schicht nicht bedruckbar sind. Ausserdem tritt beim Abrollen von Wickeln aus diesen Klebebändern ein starkes Abrollgeräusch auf.

Gemäss DE-U-7 931 547 lassen sich die obengenannten Nachteile beheben, wenn man bei der Herstellung eines Klebebandes als Trägerfilm eine Polyvinylchlorid-Folie verwendet, die sowohl geprägt als auch durch biaxiales Strecken orientiert ist. Über die Prägung wird im einzelnen lediglich ausgeführt, dass sie auf übliche Weise mit entsprechenden Vorrichtungen erzeugt werden kann. Über das biaxiale Strecken wird überhaupt nichts weiteres gesagt.

Die Aufgabe der Erfindung liegt demnach darin, ein Verfahren zur Herstellung von biaxial gestreckten und geprägten Polyvinylchlorid-Folien zur Verfügung zu stellen, das einfach und auch mit einer hohen Foliendurchgangsgeschwindigkeit durchführbar ist. Die erhaltenen Folien sollen insbesondere als Trägerfolien für die Bereitung von Klebebändern geeignet sein.

Diese Aufgabe wird im Rahmen des eingangs genannten, sich auf die US-A-2 689 378 beziehenden Verfahrens erfindungsgemäss dadurch gelöst, dass die Polyvinylchlorid-Folienbahn

$a_1$) im Verhältnis von 1,2 : 1 bis 2,2 : 1 bei der Temperatur von 90 bis 160 °C querverstreckt,

$a_2$) nach der Querverstreckung im Verhältnis von 1,7 : 1 bis 2,5 : 1 bei der Temperatur von 90 bis 160 °C längsverstreckt wird und dabei

$a_3$) der Wert des Produktes aus Quer- und Längsstreckverhältnis von 3,8 : 1 nicht überschritten wird, und

b) unmittelbar nach der Längsverstreckung geprägt wird, wobei die verstreckte Folienbahn dem Prägespalt mit der Längsverstreckungstemperatur zugeführt, die Prägewalze auf der Temperatur von −10 bis +60 °C gehalten und in die Folienbahn das Prägemuster mit der Prägewalze, die eine Prägetiefe von 0,02 bis 0,25 mm aufweist, eingeprägt wird.

Es war überraschend, dass die beiden Verfahrensschritte, nämlich das biaxiale Verstrecken einer Polyvinylchlorid-Folie und das anschliessende Prägen der verstreckten Folie kombiniert werden können. Es war vielmehr zu erwarten, dass sich das Prägen der vorher verstreckten Folie nachteilig auf die Eigenschaften der fertigen Folie auswirken würde, beispielsweise dadurch, dass in der verstreckten Folie wegen der hohen thermischen und mechanischen Beanspruchung beim Prägen Löcher auftreten würden, worauf in der eingangs genannten US-A-2 689 378 ausdrücklich hingewiesen wird. Dem erfindungsgemässen Verfahren haften diese Nachteile überraschenderweise nicht an. Durch die erfindungsgemässe Kombination von Querstrecken, Längsstrecken und Prägen wird vielmehr das bei Klebeband-Trägerfolien geforderte Eigenschaftsbild erreicht und darüber hinaus das Aufbringen der oben erwähnten antiadhäsiven Schicht überflüssig gemacht.

Die Polyvinylchlorid-Folie, von der beim erfindungsgemässen Verfahren ausgegangen wird, ist in der Regel eine durch Kalandrierung oder Extrusion hergestellte Folie. Ihre Dicke beträgt im allgemeinen 0,04 bis 0,18 mm, vorzugsweise 0,06 bis 0,13 mm. Die Kalandrierung wird in der Regel nach dem Niedertemperatur-Verfahren (Luvitherm-Verfahren), das heisst bei einer Kalandriertemperatur von 150 bis 190 °C, oder nach dem Hochtemperatur-Verfahren, das heisst bei einer Kalandriertemperatur von 180 bis 230 °C, durchgeführt. Bevorzugt sind Hart-Polyvinylchlorid-Folien.

Unter Vinylchloridpolymerisaten oder Polyvinylchlorid werden nicht nur Homopolymerisate des Vinylchlorids, sondern auch Mischpolymerisate wie Co- und Pfropfpolymerisate des Vinylchlorids verstanden, die nach den bekannten kontinuierlichen oder Chargen-Polymerisationsverfahren hergestellt werden, beispielsweise nach dem Emulsions-, Suspensions- und Massepolymerisations-Verfahren.

In den Co- und Pfropfpolymerisaten des Vinylchlorids beträgt der Gehalt an polymerisiertem Vinylchlorid in der Regel mindestens 50 Gew.-%, vorzugsweise mindestens 85 Gew.-%, bezogen auf das Polymerisat.

Zur Copolymerisation von Vinylchlorid sind beispielsweise folgende Monomere geeignet:

Olefine wie Ethylen und Propylen; Vinylester von Carbonsäuren wie Vinylacetat und Vinylpropionat; Acrylnitril; Styrol; und Cyclohexylmaleinimid.

Zur Pfropfpolymerisation können beispielsweise elastomere Polymerisate aus Butadien, Ethylen, Propylen, Styrol und/oder Acrylnitril verwendet werden.

Bevorzugte Polyvinylchloride sind Homopolymerisate des Vinylchlorids und seine Copolymerisate und Pfropfpolymerisate mit einem Gehalt von mindestens 85 Gew.-% an polymerisiertem Vinylchlorid.

Die K-Werte (DIN 53 726) der Polyvinylchloride betragen zweckmässigerweise 50 bis 80, vorzugsweise 55 bis 78.

Die Polyvinylchloride, aus denen die Polyvinylchlorid-Folien hergestellt werden, enthalten in der Regel die üblichen, für die Verarbeitung von Vinylchloridpolymerisaten vorteilhaften Hilfsstoffe, vorzugsweise Wärmestabilisatoren, Gleitmittel und Schlagzäh-Modifizierungsmittel. Sie können auch noch besondere Additive, beispielsweise antistatisch wirkende Substanzen, enthalten.

Als Wärmestabilisatoren werden vorzugsweise Organozinn-Schwefel-Verbindungen, Harnstoff- und Thioharnstoff-Derivate, Salze der Alkalimetalle sowie von Zink mit aliphatischen Carbonsäuren oder Oxicarbonsäuren, gegebenenfalls gemeinsam mit Costabilisatoren wie epoxidiertem Sojabohnenöl und Phosphiten, eingesetzt. Organozinn-Schwefel-Verbindungen wie Dimethylzinn-bis-2-ethylhexylthioglykolat, Di-n-butylzinn-bis-2-ethylhexylthioglykolat und Di-n-octylzinn-bis-2-ethylhexylthioglykolat sind bevorzugt. Die Menge an Stabilisatoren beträgt im allgemeinen 0,5 bis 3,0 Gew.-%, vorzugsweise 0,7 bis 2,0 Gew.-%, bezogen auf das Polyvinylchlorid.

Als Gleitmittel werden vorzugsweise eingesetzt 1,3-Butandiolmontansäureester gekälkt, so dass etwa 40 Gew.-% der zur Kälkung eingesetzten Montansäure als Calciumsalz vorliegen (Wachs OP), 1,3-Butandiolmontansäureester (Wachs E), Bis-stearylethylendiamin (Wachs C), Stearinsäure und/oder Fettsäureester des Glycerins. Die Menge an Gleitmittel beträgt im allgemeinen 0,5 bis 3,0 Gew.-%, vorzugsweise 0,5 bis 2,0 Gew.-%, bezogen auf das Polyvinylchlorid. Als Schlagzäh-Modifizierungsmittel werden vorzugsweise Acrylnitril-

Butadien-Styrol (ABS)-Harze, Methylmethacrylat-Acrylnitril-Butadien-Styrol (MABS)-Harze, Methylmethacrylat-Butadien-Styrol (MBS)-Harze, Polymethylmethacrylat, Copolymerisate aus Ethylen und Vinylacetat und/oder chloriertes Polyethylen verwendet. Die Menge an Schlagzäh-Modifizierungsmittel beträgt im allgemeinen 5 bis 20 Gew.-% vorzugsweise 8 bis 15 Gew.-%, bezogen auf das Polyvinylchlorid.

Die biaxiale Verstreckung der Polyvinylchlorid-Folie (der Schritt a) des erfindungsgemässen Verfahrens) wird vorzugsweise bei einer Temperatur von 110 bis 140 °C mit einem Querstreckverhältnis von 1,3 : 1 bis 1,8 : 1 und einem Längsstreckverhältnis von 1,9 : 1 bis 2,3 : 1 durchgeführt, wobei das Produkt aus Quer- und Längsstreckverhältnis (das ist das Flächenstreckverhältnis) höchstens 3,5 : 1 beträgt.

Im Hinblick auf die Verwendung der erfindungsgemäss hergestellten Folien als Trägerfolien für Klebebänder soll ein Flächenstreckverhältnis von mindestens 2,0 : 1, vorzugsweise von mindestens 2,5 : 1 erreicht werden.

Die Verstreckung der Polyvinylchlorid-Folie kann auf den bekannten Vorrichtungen zum Strecken von thermoplastischen Kunststoffen vorgenommen werden.

Solche Vorrichtungen sind beispielsweise in der eingangs genannten deutschen Auslegeschrift 1 594 129, in der deutschen Patentschrift 1 504 242, in der französischen Patentschrift 2 007 313 und in der deutschen Patentschrift 2 024 308 ausführlich beschrieben.

Die Querverstreckung der Polyvinylchlorid-Folie wird vorzugsweise mit der in der deutschen Patentschrift 2 024 308 beschriebenen Vorrichtung durchgeführt. Danach wird die auf die angegebene Strecktemperatur erhitzte Polyvinylchlorid-Folie über die zur Folienlaufrichtung schrägstehenden Scheiben geführt, auf denen sie kraftschlüssig angepresst ist. Die Schrägstellung der Scheiben ist dabei so eingerichtet, dass die angegebenen Querstreckverhältnisse erzielt werden. Das Erhitzen der Folie, die beispielsweise von einer Wickelrolle abgenommen wird oder von einem Kalander oder Extruder kommt, auf die Strecktemperatur wird vorzugsweise durch Führen der Folie über entsprechend beheizte Walzen, die vor den Scheiben angeordnet sind, vorgenommen. Es kann auch mit Hilfe von üblichen Infrarotstrahleinrichtungen geschehen. Es ist vorteilhaft, die vom Kalander oder vom Extruder kommende Polyvinylchlorid-Folie zur Querverstreckung zu führen, da dabei ein Wiederaufheizen der Folie entfällt. Zur genauen Einstellung der Querstrecktemperatur kann die Folie gegebenenfalls über eine oder mehrere entsprechend beheizte oder gekühlte Walzen geführt werden, bevor sie auf die schräggestellten Scheiben aufläuft.

Die Längsverstreckung der Polyvinylchlorid-Folie wird vorzugsweise derart durchgeführt, dass die von den Scheiben ablaufende Folie über eine übliche Walzeneinrichtung läuft. Solche Walzenanordnungen zum Längsstrecken von thermoplastischen Kunststoffen sind in der bereits genannten französischen Patentschrift 2 007 313 ausführlich beschrieben. Die Laufgeschwindigkeit der Längsstreckwalze ist gegenüber der Laufgeschwindigkeit der Folie vor dieser Walze so eingestellt, dass die Folie in dem angegebenen Verhältnis längsgestreckt wird.

Unmittelbar nach der Längsstreckung der Polyvinylchlorid-Folie erfolgt erfindungsgemäss ihre Prägung.

Unmittelbar heisst in diesem Zusammenhang, dass die Folie auf dem Weg nach dem Verstrecken bis zum Prägen keine nennenswerte Abkühlung erfährt, sondern die Längsstrecktemperatur beibehält. Dies wird vorzugsweise dadurch erreicht, dass die Folie durch das Prägewerk selbst, bestehend aus der Prägewalze und dem Presseur, längsgestreckt wird.

Die Prägung (Tiefzieh-Verformung) der verstreckten Polyvinylchlorid-Folie wird mit Hilfe der bekannten Vorrichtungen zum Prägen von thermoplastischen Kunststoffen vorgenommen. Solche Vorrichtungen sind beispielsweise in der deutschen Offenlegungsschrift 2 833 982 beschrieben.

Die Prägewalze weist linien-, strich-, kalotten- oder punktförmige Muster auf, vorzugsweise ein Rautenmuster, ein Feinleinenmuster, ein Shirtingmuster, ein Muster aus eng beieinanderliegenden, längsgerichteten Rillen oder Überlagerungen (Mischungen) solcher Muster. Die Tiefe (Prägetiefe) der Muster der Prägewalze beträgt erfindungsgemäss 0,02 bis 0,25 mm, vorzugsweise 0,05 bis 0,18 mm.

Die Temperatur der Folie beim Prägen beträgt vorzugsweise 110 bis 140 °C.

Die Temperatur der Prägewalze beträgt vorzugsweise 5 bis 30 °C. Diese Temperatur wird zweckmässigerweise mit einer Flüssigkeit, beispielsweise Wasser oder Kältemittel eingestellt, das mit der entsprechenden Temperatur durch die Walze geführt wird.

Die Temperatur des Presseurs, der vorzugsweise aus einer Gummiwalze besteht, liegt zwischen der Folientemperatur und der Raumtemperatur. Der Presseur nimmt nämlich zwangsweise eine derartige Temperatur an, da er weder gekühlt noch erhitzt wird.

Der Prägedruck (Liniendruck im Prägespalt) beträgt beim erfindungsgemässen Verfahren in der Regel 10 bis 200 Newton je Zentimeter Folienbreite (N/cm), vorzugsweise 50 bis 90 N/cm.

Die Geschwindigkeit der Folie an der Prägewalze (Geschwindigkeit der Prägewalze) beträgt in der Regel 50 bis 300 m/min, vorzugsweise 100 bis 150 m/min.

Nach Verlassen der Prägewalze wird die Folie weiter abgekühlt, vorzugsweise durch Führen über eine oder mehrere Kühlwalzen, und anschliessend aufgewickelt.

Die erfindungsgemäss verstreckte und geprägte Folie hat eine mittlere Materialdicke vom im allgemeinen 0,02 bis 0,05 mm, vorzugsweise 0,025 bis 0,035 mm. Die Gesamtdicke der Folie (das ist ihre Materialdicke einschliesslich Prägung) beträgt im allgemeinen 0,025 bis 0,15 mm, vorzugsweise 0,035 bis 0,085 mm. Daraus resultiert als Tiefe des eingeprägten Musters 0,005 bis 0,10 mm, vorzugsweise 0,01 bis 0,05 mm.

Das erfindungsgemässe Verfahren zum biaxialen Verstrecken und Prägen von Polyvinylchlorid-Folien weist eine Reihe von Vorteilen auf. Es ist einfach und auch mit hohen Foliengeschwindigkeiten durchführbar. Bei der Verwendung der erfindungsgemäss hergestellten Folie als Trägerfolie für Klebebänder ist das Aufbringen einer antiadhäsiven Schicht (release coat) nicht mehr erforderlich. Die mit Klebemitteln beschichtete Folie lässt sich sehr leicht abziehen. Beim Abrollen vom Wickel entsteht kein nennenswertes Geräusch. Beim Schneiden zu Klebebändern mit gewünschten Abmessungen treten genausowenig Abrisse auf, wie bei einer ungeprägten Hart-Polyvinylchlorid-Folie, die mit einer antiadhäsiven Schicht versehen ist. Weil das Prägen unmittelbar nach dem Längsverstrecken vorgenommen wird, erfährt die Folie lediglich einen geringen, durch den Längsstreckvorgang bedingten Breitenverlust (also keinen zusätzlichen durch den Prägevorgang). Die erfindungsgemäss hergestellte Folie lässt sich leicht bedrucken. Die elektrostatische Aufladung dieser Folie beim Lauf über Walzen verläuft deutlich langsamer als die einer ungeprägten Folie. Was die erfindungsgemässe Folie besonders auszeichnet ist die Tatsache, dass trotz der Prägung nach der Verstreckung die für Trägerfolien zur Herstellung von Klebebändern gewünschten relativ hohen mechanischen Festigkeitswerte vorliegen, bezüglich der Schlagzugzähigkeit in Folienquerrichtung überraschenderweise deutlich verbesserte Werte erhalten werden, die beispielsweise im Falle der mit dem Feinleinenmuster geprägten Folie sogar um 50% höher liegen als bei der ungeprägten Folie, und dass das in die Folie geprägte Muster und seine Tiefe auch beim Erwärmen der gestreckten und geprägten Folie auf eine Temperatur bis zu etwa 80 °C erhalten bleibt.

Die Erfindung wird nun durch Beispiele und anhand einer Zeichnung näher erläutert.

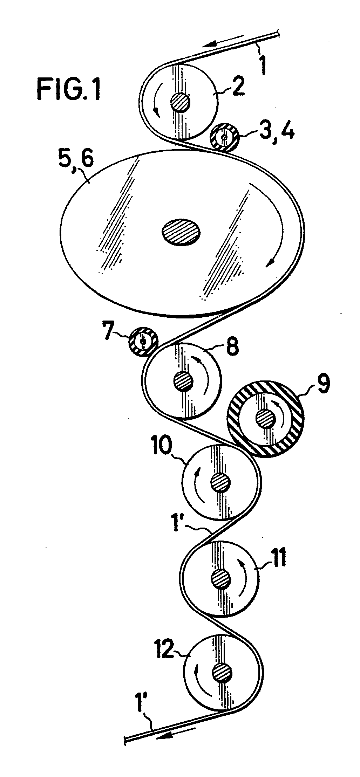

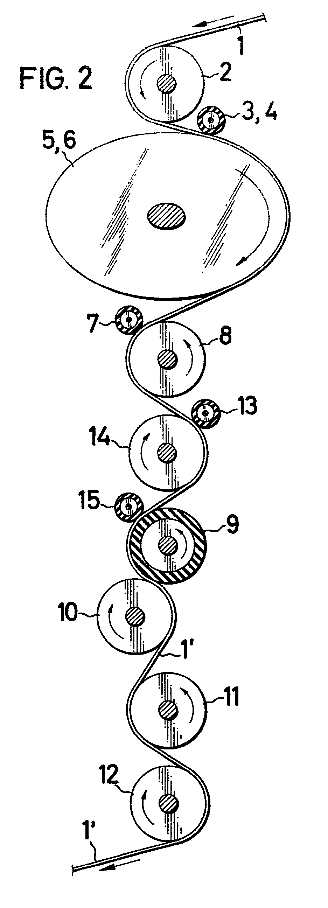

In Fig. 1 und 2 sind zwei Vorrichtungen dargestellt, die vorzugsweise zur Durchführung des erfindungsgemässen Verfahrens verwendet werden.

Beispiel 1

Ausgegangen wird von einer Hart-Polyvinylchlorid-Folie, hergestellt nach dem Kalander-Hochtemperatur-Verfahren aus einem Suspensions-Homopolymerisat mit dem K-Wert 55, das mit einem üblichen Organozinn-Stabilisator stabilisiert ist und ein für die Kalandrierung übliches Gleitmittel (Wachs OP) enthält. Die Folie hat eine Dicke von 0,095 mm.

Zusammenfassung der Verfahrensbedingungen:
Temperatur der Folie bei der Querverstreckung: 135 °C
Querstreckverhältnis: 1,6 : 1
Temperatur der Folie bei der Längsverstreckung: 125 °C

Längsstreckverhältnis: 2,1 : 1
Temperatur der Folie bei der Prägung: 125 °C
Temperatur der Prägewalze: 10 °C
Prägedruck (Liniendruck im Prägespalt): 50 N/cm
Geschwindigkeit der Folie an der Prägewalze
(Geschwindigkeit der Prägewalze): 150 m/min
Prägemuster: Rautenmuster
Prägetiefe des Musters auf der Walze: 0,18 mm.

Nachstehend wird in Anlehnung an Fig. 1 die Ausführung des Beispiels 1 noch näher beschrieben:

Die vom Kalander kommende Folie 1 wird durch die Walze 2 auf die Querstrecktemperatur gebracht und läuft dann auf die beiden schräg zueinander angeordneten Scheiben 5 und 6 auf (gemäss deutscher Patentschrift 2 024 308), wobei sie beim Auflaufen auf die Scheiben mit den beiden Gummirollen 3 und 4 kurzzeitig angepresst wird. Nach Verlassen der Scheiben 5, 6 wird die Folie 1 über die Walze 8 geführt, an die sie durch die Gummiwalze 7 angedrückt wird. Die Walze 8 bringt die Folie 1 auf die Längsstrecktemperatur. Die Folie 1 läuft nun über die gekühlte Prägenwalze 10, an die sie mit dem Presseur 9 angepresst wird. Die Längsstreckung erfolgt auf dem Weg von der Walze 8 zum Walzenpaar 9, 10. Die Prägung der Folie 1 erfolgt im Spalt des Walzenpaares 9, 10 unmittelbar nach der Längsverstreckung. Nach Verlassen der Prägewalze 10 wird die verstreckte und geprägte Folie 1′ mit Hilfe der Walzen 11 und 12 auf Raumtemperatur abgekühlt und in einer Aufwickeleinrichtung (nicht eingezeichnet) aufgewickelt. Die gestreckte und geprägte Folie hat eine Gesamtdicke von 0,055 mm, die Prägetiefe in der Folie ist 0,03 mm und die mittlere Materialdicke der Folie ist 0,025 mm.

Beispiel 2

Ausgegangen wird von einer Hart-Polyvinylchlorid-Folie, hergestellt nach dem Kalander-Hochtemperatur-Verfahren aus einem Masse-Homopolymerisat mit dem K-Wert 60, das mit einem üblichen Organozinn-Stabilisator stabilisiert, mit 10 Gew.-%, bezogen auf Polyvinylchlorid, von einem üblichen Acrylnitril-Butadien-Styrol-Polymeren schlagzäh modifiziert ist und ein für die Kalandrierung übliches Gleitmittel (Wachs C) enthält. Die Folie hat eine Dicke von 0,13 mm.
Zusammenfassung der Verfahrensbedingungen:
Temperatur der Folie bei der Querverstreckung: 145 °C
Querstreckverhältnis: 2 : 1
Temperatur der Folie bei der Längsverstreckung: 135 °C
Längsstreckverhältnis: 1,7 : 1
Temperatur der Folie bei der Prägung 135 °C.
Temperatur der Prägewalze: 20 °C
Prägedruck (Liniendruck im Prägespalt): 70 N/cm
Geschwindigkeit der Folie an der Prägewalze
(Geschwindigkeit der Prägewalze): 120 m/min
Prägemuster: Feinleinenstruktur
Prägetiefe des Musters an der Walze: 0,1 mm.

Nachstehend wird in Anlehnung an Fig. 2 die Ausführung des Beispiels 2 noch näher beschrieben:

Die vom Kalander kommende Folie 1 wird durch die Walze 2 auf die Querstrecktemperatur gebracht und läuft dann auf die beiden schräg zueinander angeordneten Scheiben 5 und 6 auf (gemäss deutscher Patentschrift 2 024 308), wobei sie beim Auflaufen auf die Scheiben mit den beiden Gummirollen 3 und 4 kurzzeitig angepresst wird. Nach Verlassen der Scheiben 5, 6 wird die Folie 1 über die Walze 8 geführt, an die sie durch die Gummiwalze 7 angedrückt wird. Die Walze 8 bringt die Folie 1 auf die Längsstrecktemperatur. Die Folie 1 läuft nun über die Walze 14, an die sie durch die Gummiwalze 13 angedrückt wird, und über die Walze 9, an die sie durch die Gummiwalze 15 angedrückt wird. Auf dem Weg von Walze 8 zu Walze 14 wird die Folie 1 in einer ersten Stufe, und auf dem Weg von Walze 14 zu Walze 9 in einer zweiten Stufe längsgestreckt. Die Prägung der Folie 1 erfolgt im Spalt zwischen Walze 9 und 10 unmittelbar nach der Längsverstreckung. Walze 9 ist der Presseur, Walze 10 ist die gekühlte Prägewalze. Nach Verlassen der Prägewalze 10 wird die verstreckte und geprägte Folie 1′ mit Hilfe der Walzen 11 und 12 auf Raumtemperatur gebracht und in einer Aufwickeleinrichtung (nicht eingezeichnet) aufgewickelt.

Die gestreckte und geprägte Folie hat eine Gesamtdicke von 0,06 mm, die Prägetiefe in der Folie ist 0,025 mm und die mittlere Materialdicke der Folie ist 0,035 mm.

Beispiel 3

Ausgegangen wird von einer Hart-Polyvinylchlorid-Folie, hergestellt nach dem Kalander-Niedertemperatur-Verfahren aus einem Emulsions-Homopolymerisat mit dem K-Wert 78, das mit einem Organozinn-Stabilisator stabilisiert ist und als Gleitmittel Wachs OP enthält.
Die Folie hat eine Dicke von 0,09 mm.
Zusammenfassung der Verfahrensbedingungen:
Temperatur der Folie bei der Querverstreckung: 140 °C
Querstreckverhältnis: 1,3 : 1
Temperatur der Folie bei der Längsverstreckung: 135 °C
Längsstreckverhältnis: 2,1 : 1
Temperatur der Folie bei der Prägung: 135 °C
Temperatur der Prägewalze: 5 °C
Prägedruck (Liniendruck im Prägespalt): 50 N/cm
Geschwindigkeit der Folie an der Prägewalze
(Geschwindigkeit der Prägewalze): 100 m/min
Prägemuster: Shirtingmuster
Prägetiefe des Musters auf der Walze: 0,13 mm.

Die Durchführung dieses Beispiels erfolgt in Anlehnung an Fig. 1 und wie in Beispiel 1 beschrieben.

Die gestreckte und geprägte Folie hat eine Gesamtdicke von 0,05 mm, die Prägetiefe in der Folie ist 0,02 mm und die mittlere Materialdicke der Folie beträgt 0,03 mm.

**Patentansprüche**

1. Verfahren zur Herstellung von gestreckten und geprägten Polyvinylchlorid-Folien durch Erhitzen einer Polyvinylchlorid-Folienbahn (1) auf eine Temperatur von 90 bis 160°C, Prägen der erhitzten Folienbahn im Prägespalt eines Prägewerkes aus einer Prägewalze (10) und einer Gegendruckwalze (9), wobei die Prägewalze (10) durch Kühlen auf einer Temperatur von −10 bis +60°C gehalten wird, und durch Abkühlen der das Prägewerk verlassenden Folienbahn (1') auf Raumtemperatur, dadurch gekennzeichnet, dass die Polyvinylchlorid-Folienbahn (1)

$a_1$) im Verhältnis von 1,2 : 1 bis 2,2 : 1 bei der Temperatur von 90 bis 160°C querverstreckt,

$a_2$) nach der Querverstreckung im Verhältnis von 1,7 : 1 bis 2,5 : 1 bei der Temperatur von 90 bis 160°C längsverstreckt wird und dabei

$a_3$) der Wert des Produktes aus Quer- und Längsstreckverhältnis von 3,8 : 1 nicht überschritten wird, und

b) unmittelbar nach der Längsverstreckung geprägt wird, wobei die verstreckte Folienbahn dem Prägespalt mit der Längsverstreckungs-Temperatur zugeführt, die Prägewalze auf der Temperatur von −10 bis +60°C gehalten und in die Folienbahn das Prägemuster mit der Prägewalze (10), die eine Prägetiefe von 0,02 bis 0,25 mm aufweist, eingeprägt wird.

2. Verfahren nach Anspruch 1, dadurch gekennzeichnet, dass die biaxiale Verstreckung bei einer Temperatur von 110 bis 140°C mit einem Querstreckverhältnis von 1,3 : 1 bis 1,8 : 1 und einem Längsstreckverhältnis von 1,9 : 1 bis 2,3 : 1 durchgeführt wird, wobei das Produkt aus Quer- und Längsstreckverhältnis höchstens 3,5 : 1 beträgt.

3. Verfahren nach Anspruch 1, dadurch gekennzeichnet, dass die Folie im Verhältnis von 1,3 : 1 bis 1,8 : 1 bei einer Temperatur von 110 bis 140°C querverstreckt wird, im Verhältnis von 1,9 : 1 bis 2,3 : 1 bei einer Temperatur von 110 bis 140°C längsverstreckt wird, wobei der Wert des Produktes aus Quer- und Längsstreckverhältnis von 3,5 : 1 nicht überschritten wird, und bei der Prägung die Folie eine Temperatur von 110 bis 140°C und die Prägewalze eine Temperatur von 5 bis 30°C und eine Prägetiefe von 0,05 bis 0,18 mm hat.

## Claims

1. A method of manufacturing biaxially stretched and embossed vinyl chloride polymer films by heating a vinyl chloride polymer sheeting (1) at a temperature of 90 to 160°C, embossing the heated sheeting in the embossing gap of an embossing unit consisting of an embossing roller (10) and a counter roller (9), the embossing roller being kept at a temperature of −10 to +60°C by cooling, and by cooling the sheeting (1') at room temperature after it has left the embossing unit, characterised in that the vinyl chloride polymer sheeting (1) is

a) stretched transversally at a ratio of 1.2 : 1 to 2.2 : 1 at a temperature of 90 to 160°C,

$a_2$) stretched longitudinally at a ratio of 1.7 : 1 to 2.5 : 1 at a temperature of 90 to 160°C after the transverse stretching, and in so doing

$a_3$) the value of 3.8 : 1 for the product of the transverse and longitudinal stretching ratios is not exceeded, and it is

b) embossed, immediately after the longitudinal stretching, by feeding the stretched sheeting to the embossing gap, keeping the embossing roller at a temperature of −10 to +60°C and by embossing into the sheet the embossing pattern with the embossing roller (10) which has a depth of embossing of 0.02 to 0.25.

2. A method as claimed in claim 1, characterised in that the biaxial stretching is carried out at a temperature of 110 to 140°C at a transverse stretching ratio of 1.3 : 1 to 1.8 : 1 and a longitudinal stretching ratio of 1.9 : 1 to 2.3 : 1, the product of the transverse and longitudinal stretching ratios not exceeding 3.5 : 1.

3. A method as claimed in claim 1, characterised in that the sheeting is stretched transversally at a ratio of 1.3 : 1 to 1.8 : 1 at a temperature of 110 to 140°C, and is stretched longitudinally at a ratio of 1.9 : 1 to 2.3 : 1 at a temperature of 110 to 140°C, the product of the transverse and longitudinal stretching ratios not exceeding a value of 3.5 : 1 and, during the embossing, the sheeting being at a temperature of 110 to 140°C and the embossing roller being at a temperature of 5 to 30°C and the depth of embossing being 0.05 to 0.18 mm.

## Revendications

1. Procédé de production de feuilles en poly(chlorure de vinyle) étirées et gaufrées, par chauffage d'une bande (1) de poly(chlorure de vinyle) jusqu'à une température de 90 à 160°C, gaufrage de la bande, chauffée, dans l'intervalle de gaufrage d'une machine à gaufrer consistant en un cylindre de gaufrage (10) et un cylindre de contre-pression (9), le cylindre de gaufrage (10) étant maintenu par refroidissement à une température de −10 à 60°C et refroidissement jusqu'à la température ambiante de la bande (1') sortant de la machine à gaufrer, procédé caractérisé en ce que la bande (1) de poly(chlorure de vinyle):

$a_1$) est étirée transversalement à un taux ou rapport de 1,2 : 1 à 2,2 : 1 à la température de 90 à 160°C,

$a_2$) subit, après l'étirage transversal, un étirage longitudinal à un taux ou rapport de 1,7 : 1 jusqu'à 2,5 : 1 à la température de 90

$a_3$) un taux de produit du rapport d'étirage transversal et longitudinal de 3,8 : 1 n'étant pas excédé, et

b) immédiatement après l'étirage longitudinal, la feuille est gaufrée, la bande étirée étant acheminée à la température de l'étirage longitudinal à l'intervalle de gaufrage, le cylindre de gaufrage étant maintenu à la température de −10 jusqu'à +60°C et le motif de gaufrage étant appliqué à la bande à l'aide du cylindre de gaufrage (10), qui présente une profondeur de gaufrage de 0,02 à 0,25 mm.

2. Procédé selon la revendication 1, caractérisé en ce que l'étirage bidirectionnel est effectué à une température de 110 à 140 °C avec un taux ou rapport d'étirage transversal de 1,3 : 1 à 1,8 : 1 et un taux ou rapport d'étirage longitudinal de 1,9 : 1 à 2,3 : 1, le produit du rapport d'étirage transversal et longitudinal étant au maximum égal à 3,5 : 1.

3. Procédé selon la revendication 1, caractérisé en ce que la feuille subit un étirage transversal à un taux ou rapport de 1,3 : 1 jusqu'à 1,8 : 1 à une température de 110 °C, elle subit un étirage longitudinal à un taux ou rapport de 1,9 : 1 jusqu'à 2,3 : 1 à une température de 110 à 140 °C, le taux de produit du rapport d'étirage transversal et longitudinal de 3,5 : 1 n'étant pas excédé, et, lors du gaufrage, la feuille de gaufrage présente une température de 110 à 140 °C et le cylindre de gaufrage présente une température de 5 à 30 °C et une profondeur de gaufrage de 0,05 à 0,18 mm.

FIG.1

FIG. 2